# EUROPEAN PATENT APPLICATION

(11) **EP 3 421 522 A1**
(43) Date of publication of application: **02.01.2019**
(21) Application number: 17756311.1
(22) Date of filing: 14.02.2017
(51) Int. Cl.: C08J 3/20, C08K 3/28, C08K 5/17, C08L 79/02, C08L 101/08

(54) **METHOD FOR PRODUCING THERMOSETTING AQUEOUS BINDER**

(30) Priority: 24.02.2016 JP 2016033195
(71) Applicant: Asahi Fiber Glass Co., Ltd., Tokyo 101-0045 (JP)
(72) Inventor: FUNAKOSHI Nami, Tokyo 101-0045 (JP); IZUMI Ippei, Tokyo 101-0045 (JP); ISHIGURO Yoshitomo, Tokyo 101-0045 (JP)
(74) Representative: Enomoto, Kéi
(86) International application number: PCT/JP2017/005349
(87) International publication number: WO 2017/145871

(57) **Abstract**

Provided is a method for producing a thermosetting aqueous binder comprising a polycarboxylic acid and an amine-based compound serving as a crosslinking agent for the polycarboxylic acid and having two or more per molecule of at least one from between an amino group and an imino group, the method comprising: a blocking step for blocking at least a part of the carboxy groups of the polycarboxylic acid with a volatile basic compound to obtain a blocked polycarboxylic acid; and a mixing step for mixing the blocked polycarboxylic acid and the amine-based compound. According to such an invention, it is possible to reduce a precipitate and a viscous substance generated during production to a level sufficient for practical use.

## Description

### Technical Field

The present invention relates to a method for producing a thermosetting aqueous binder.

### Background Art

Inorganic fiber heat-insulating sound-absorbing materials such as glass wool and rock wool are generally produced by attaching a binder to inorganic fibers and then curing the binder. As the binder, an aqueous binder comprising a polymer having a carboxy group, a crosslinking agent having an amino group, and water has been known (for example, Patent Literature 1).

### Citation List

### Patent Literature

Patent Literature 1: Japanese Unexamined Patent Publication No. 2013-151777

### Summary of Invention

### Technical Problem

However, in the aqueous binder comprising a polymer having a carboxy group and a crosslinking agent having an amino group, a precipitate may be generated or a viscous substance may be separated during production, so that an aqueous binder thus obtained may be inhomogeneous.

In this regard, an object of the present invention is to provide a method for producing an aqueous binder with which a generation of a precipitate and a viscous substance during production is reduced to a level sufficient for practical use.

### Solution to Problem

The present invention provides a method for producing a thermosetting aqueous binder comprising a polycarboxylic acid and an amine-based compound serving as a crosslinking agent for the polycarboxylic acid and having two or more per molecule of at least one from between an amino group and an imino group, the method including: a blocking step for blocking at least a part of the carboxy groups of the polycarboxylic acid with a volatile basic compound to obtain a blocked polycarboxylic acid; and a mixing step for mixing the blocked polycarboxylic acid and the amine-based compound.

According to the production method of the present invention, it is possible to reduce a generation of precipitate and a viscous substance during production of the aqueous binder to a level sufficient for practical use. According to this, homogeneity of the aqueous binder can be enhanced. In addition, according to the production method of the present invention, it is possible to obtain an aqueous binder with which the strength of a cured product is improved. Moreover, in a case where an inorganic fiber heat-insulating sound-absorbing material is produced by applying an aqueous binder to inorganic fibers, with an aqueous binder obtained by the production method of the present invention, the aqueous binder can be uniformly applied to the inorganic fibers and an inorganic fiber heat-insulating sound-absorbing material obtained by curing the applied aqueous binder has excellent compressive strength or tensile strength.

According to the result of studies by the present inventors, in a production method of the related art, generation of a precipitate or separation of a viscous substance during production is caused by a reaction product generated immediately after mixing of the polycarboxylic acid and the amine-based compound in many cases, and this is caused by rapid reaction speed of amidation reaction between the amino group or imino group of the amine-based compound and the carboxy group of the polycarboxylic acid. Such a phenomenon particularly significantly appears in a case where a functional group concentration of the polycarboxylic acid or the amine-based compound is high. That is, such a phenomenon is more likely to occur in a case where the polycarboxylic acid has a high acid value, a case where the amine-based compound is highly branched, or a case where the amine-based compound has a high molecular weight. According to the production method of the present invention, since at least a part of the carboxy groups is blocked by the blocking step before the mixing step, the apparent speed of reaction between the amine-based compound and the polycarboxylic acid decreases so that a phenomenon such as increasing of a viscosity of the binder or generation of an insoluble condensation reaction product is suppressed.

Further, since the basic compound used in blocking is volatile, the basic compound volatilizes when the aqueous binder is finally thermally cured, so that the basic compound hardly remains as a residual impurity in a cured product. For this reason, not only homogeneity as the cured product is enhanced but also crosslinking density is improved. In the related art, when a raw material having a high functional group density is used to achieve high crosslinking density, generation of a precipitate or a viscous substance during production cannot be avoided. On the other hand, according to the method of the present invention, by blocking at least a part of the carboxy groups of the polycarboxylic acid with the volatile basic compound, occurrence of the above-described problem during production is suppressed so that a raw material having a high functional group density can be used.

Here, the amine-based compound in the mixing step may be an aqueous solution comprising the amine-based compound at a concentration of 20 to 80 mass%. By previously diluting the amine-based compound to be mixed in this way, the viscosity of the amine-based compound itself and the viscosity of the aqueous binder can be decreased. Further, since a local increase in concentration of the amino group and/or the imino group when the amine-based compound is mixed with the blocked polycarboxylic acid can be reduced, the reaction between the amine-based compound and the blocked polyacrylic acid during producing the aqueous binder can be suppressed so that the aqueous binder can be made more homogeneous.

Further, the production method can comprise a preliminary mixing step for mixing a crosslinking agent other than the amine-based compound (hereinafter, referred to as "non-amine-based compound" in some cases) and the polycarboxylic acid before the blocking step. In order to adjust characteristics of a cured product of the aqueous binder, the non-amine-based compound may be used as the crosslinking agent in addition to the amine-based compound. By adding the non-amine-based compound before blocking, the concentration of the polycarboxylic acid in the system decreases so that dilution is carried out. This can cause the blocking reaction to more easily and uniformly occur.

In this case, the non-amine-based compound may be a polyol. By using the polyol, since an ester bond can be introduced into the cured product of the aqueous binder as well as an amide bond, a range of design for performance of the cured product increases and a problem which is caused by excessive amide bond, such as water absorbability, can be solved.

### Advantageous Effects of Invention

According to the present invention, it is possible to provide a method for producing an aqueous binder with which a generation of a precipitate and a viscous substance during production is reduced to a level sufficient for practical use.

### Description of Embodiments

Hereinafter, preferred embodiments of the present invention will be described. However, the present invention is not limited to the following embodiments at all.

A method for producing a thermosetting aqueous binder (hereinafter, abbreviated as "aqueous binder" in some cases) according to this embodiment comprises a blocking step for blocking at least a part of carboxy groups of a polycarboxylic acid with a volatile basic compound to obtain a blocked polycarboxylic acid and a mixing step for mixing the blocked polycarboxylic acid and an amine-based compound having two or more per molecule of at least one from between an amino group and an imino group (hereinafter, abbreviated as "amine-based compound" in some cases).

First, the blocking step will be specifically described.

The blocking step is to block at least a part of the carboxy group of a plurality of carboxy groups included in one molecule of a polycarboxylic acid with a volatile basic compound. Here, the term "block" means that the carboxy group is blocked sterically by a volatile basic compound. In the blocked polycarboxylic acid formed by the blocking, a permanent bond between the polycarboxylic acid and the volatile basic compound is not formed, and it is sufficient that the polycarboxylic acid is blocked at least to the extent that reaction of the amine-based compound can be prevented when the amine-based compound is added in the mixing step. Further, in the case of thermally curing the aqueous binder finally thus obtained, it is preferable that the volatile basic compound separates from the carboxy group by volatilization or the like (de-blocking), and the polycarboxylic acid generated by de-blocking and the amine-based compound react to each other.

Specific examples of the form of blocking include a state where an ion pair is formed between the carboxy group and the volatile basic compound, a state where the volatile basic compound is coordinated to the carboxy group, and a state where the volatile basic compound exists in the vicinity of the carboxy group by intermolecular force, but the form of blocking is not limited thereto.

The block percentage in the blocking step is more than 0 mol%, preferably 10 mol% or more, more preferably 30 mol% or more, further preferably 40 mol% or more, and particularly preferably 50 mol% or more, from the viewpoint of obtaining sufficient blocking effect. Further, in order to more reliably cause the curing reaction of the aqueous binder, the block percentage is preferably set to be not extremely high. That is, the block percentage is 100 mol% or less, preferably 90 mol% or less, more preferably 80 mol% or less, and further preferably 75 mol% or less.

Here, the block percentage represents the degree of the blocking and means a percentage (mol%) of the total number of moles of the volatile basic compound to the total number of moles of the carboxy group of the polycarboxylic acid. As for an index of the block percentage, the pH of a mixed solution of the polycarboxylic acid having the blocked carboxy group and the volatile basic compound can be used. For example, in a case where the aqueous polyacrylic acid solution having an initial pH of 2.0 is blocked by an aqueous ammonium hydroxide solution as the volatile basic compound, it can be determined that the block percentages at pH 3.0, pH 3.2, and pH 3.5 are 10 mol%, 30 mol%, and 50 mol%, respectively.

In the blocking step, it is not necessary to block all the polycarboxylic acids, and a polycarboxylic acid molecule which is not blocked may be present after the blocking step. It is preferable that polycarboxylic acid molecule is uniformly blocked.

As the polycarboxylic acid used in the blocking step, polycarboxylic acids as described below can be used. That is, the polycarboxylic acid is preferably a polycarboxylic acid having a weight average molecular weight of 1000 to 20000 and an acid value of 500 to 900 mgKOH/g (hereinafter, abbreviated as "high-molecular-weight polycarboxylic acid" in some cases). Incidentally, weight average molecular weight is a value in terms of polystyrene measured by gel permeation chromatography (GPC), and acid value means a mass of potassium hydroxide (mgKOH) required for neutralizing 1 g of polycarboxylic acid.

The high-molecular-weight polycarboxylic acid is preferably one having, as a monomer unit, an ethylenically unsaturated monomer having a carboxy group, that is, one obtained by polymerizing an ethylenically unsaturated monomer having a carboxy group. Incidentally, one or no less than two kinds of the ethylenically unsaturated monomer having a carboxy group can be used. The latter case includes a case where a monomer unit having a carboxy group that constitutes an ethylenically high-molecular-weight polycarboxylic acid consists only of an ethylenically unsaturated monomer having a carboxy group, and a case where the monomer unit consists of an ethylenically unsaturated monomer having a carboxy group and a copolymerizable monomer having no carboxy group. The content of the unsaturated monomer is preferably 90 mass% or more and further preferably 95 mass% or more based on the total amount of the monomer.

Examples of the ethylenically unsaturated monomer having a carboxy group include (meth)acrylic acid, crotonic acid, fumaric acid, maleic acid, 2-methyl maleic acid, itaconic acid, 2-methyl itaconic acid, α-β-methylene glutaric acid, monoalkyl maleate, monoalkyl fumarate, maleic anhydride, acrylic anhydride, P-(meth)acryloyloxyethylene hydrogen phthalate, β-(meth)acryloyloxyethylene hydrogen maleate, and β-(meth)acryloyloxyethylene hydrogen succinate. Among these, from the viewpoint of controlling the molecular weight of the polycarboxylic acid, it is preferable to use (meth)acrylic acid. In addition, in a case where the acid value of the polycarboxylic acid is adjusted to 700 mgKOH/g or more, it is preferable to use maleic acid or fumaric acid. Incidentally, (meth)acrylic means acrylic or methacrylic, and the same is true for similar compounds.

Examples of the copolymerizable monomer having no carboxy group include acrylic monomers such as methyl (meth)acrylate, ethyl (meth)acrylate, n-butyl (meth)acrylate, isobutyl (meth)acrylate, t-butyl (meth)acrylate, 2-ethylhexyl (meth)acrylate, cetyl (meth)acrylate, n-stearyl (meth)acrylate, diethylene glycol ethoxy(meth)acrylate, methyl-3-methoxy(meth)acrylate, ethyl-3-methoxy(meth)acrylate, butyl-3-methoxy(meth)acrylate, cyclohexyl (meth)acrylate, benzyl (meth)acrylate, isobornyl (meth)acrylate, tetrahydrofurfuryl acrylate, 2-hydroxyethyl acrylate, 2-hydroxypropyl acrylate, 4-hydroxybutyl acrylate, trihydric or higher polyol mono(meth)acrylate, aminoalkyl (meth)acrylate, N-alkylaminoalkyl (meth)acrylate, and N,N-dialkylaminoalkyl (meth)acrylate; vinyl monomers such as vinylalkyl ether, N-alkylvinyl amine, N,N-dialkylvinyl amine, N-vinyl pyridine, N-vinyl imidazole, and N-(alkyl)aminoalkylvinyl amine; amide monomers such as (meth)acrylamide, N-alkyl (meth)acrylamide, N,N-dialkyl (meth)acrylamide, N,N-dialkylaminoalkyl (meth)acrylamide, diacetone (meth)acrylamide, N-vinyl formamide, N-vinyl acetamide, and N-vinyl pyrrolidone; aliphatic unsaturated hydrocarbons such as ethylene, propylene, isobutylene, isoprene, and butadiene; styrene monomers such as styrene, α-methyl styrene, p-methoxystyrene, vinyl toluene, p-hydroxystyrene, and p-acetoxystyrene; vinyl ester monomers such as vinyl acetate and vinyl propionate; and acrylonitrile and glycidyl (meth)acrylate. These may be used singly or in combination of two or more kinds.

The acid value of the high-molecular-weight polycarboxylic acid is preferably 500 to 900 mgKOH/g and preferably 550 to 750 mgKOH/g. When the acid value of the polycarboxylic acid is within this numerical range, the strength of the cured product obtained by heating the aqueous binder is improved.

The weight average molecular weight of the high-molecular-weight polycarboxylic acid is preferably 1000 to 20000, more preferably 2000 to 15000, and further preferably 2000 to 10000. When the weight average molecular weight of the polycarboxylic acid is within this numerical range, the fluidity (viscosity) of the aqueous binder becomes favorable. In addition, when the weight average molecular weight is within this numerical range, it is possible to improve balance between the thermal curing rate of the aqueous binder and various physical properties of the cured product such as strength.

As for the polycarboxylic acid, the content of the high-molecular-weight polycarboxylic acid in the total amount of the polycarboxylic acid is preferably 90 mass% or more and further preferably 95 mass% or more, and may be 100 mass%, although this does not exclude comprising those other than the high-molecular-weight polycarboxylic acid (for example, those having a weight average molecular weight of less than 1000 or those having an acid value out of the range of 500 to 900 mgKOH/g).

The polycarboxylic acid may include only polycarboxylic acid or may be an aqueous polycarboxylic acid solution. The concentration of the polycarboxylic acid in the aqueous polycarboxylic acid solution may be 30 to 70 mass%.

As the volatile basic compound used in the blocking step, volatile basic compounds as described below can be used. That is, the volatile basic compound is preferably a basic compound having a boiling point equal to or lower than a temperature when the aqueous binder is heated to be cured and having no functional group exhibiting reactivity to a carboxy group, an amino group, and an imino group at the temperature equal to or lower than the boiling point. The boiling point of the volatile basic compound depends on the curing temperature of the aqueous binder, but is preferably 200°C or lower and further preferably 150°C or lower. Since such a volatile basic compound rapidly volatilizes when the aqueous binder is heated to be cured, the volatile basic compound does not inhibit the crosslinking reaction between the polycarboxylic acid and the crosslinking agent. Further, the volatile basic compound is preferably a weak base which interacts or reacts with the carboxy group of the polycarboxylic acid competitively with the amino group and/or the imino group of the amine-based compound. Examples of the volatile basic compound include ammonium hydroxide (ammonia solution) and tertiary amines such as triethylamine, methylpropylamine, and N-methylmorpholine.

The amount of the volatile basic compound blended in the blocking step can be appropriately determined according to the aforementioned block percentage. Generally, the amount of the volatile basic compound is 0.8 to 60 parts by mass with respect to 100 parts by mass of solid content of the polycarboxylic acid although depending on the molecular weight of the volatile basic compound used.

Hereinbefore, the blocking step has been described, but hereinafter, the mixing step will be specifically described.

In the mixing step, the blocked polycarboxylic acid and the amine-based compound are mixed. The amine-based compound is not particularly limited as long as it has two or more per molecule of at least one from between an amino group and an imino group and serves as a crosslinking agent for the polycarboxylic acid, and examples thereof include aliphatic polyamine, alicyclic polyamine, and aromatic polyamine. Of them, from the viewpoint of water solubility, aliphatic polyamine is preferable and aliphatic polyamine having an alkylene polyamine backbone is preferable.

Examples of such an amine-based compound include polyethyleneimine, diethylenetriamine, triethylenetetramine, tetraethylenepentamine, pentaethylenehexamine, hexaethyleneheptamine, heptaethyleneoctamine, N-(3-aminopropyl)butane-1,4-diamine, N,N-di(3-aminopropyl)butane-1,4-diamine, bishexamethylenetriamine, 1,2,3-propanetriamine, and 1,1,4,4-butanetetraamine. Incidentally, polyethyleneimine is obtained by polymerizing ethyleneimine and is a water-soluble resin having an amino group formed at the terminal of the molecule or an imino group or an amino group formed in the molecule according to a polymerization catalyst or a polymerization condition.

The weight average molecular weight of the amine-based compound may be 100 to 2000, 200 to 1000, or 200 to 600. When the weight average molecular weight of the amine-based compound is within the range of 100 to 2000, fluidity of the aqueous binder and various physical properties of the cured product of the aqueous binder can be optimized.

The amine value of the amine-based compound may be 850 to 1650 mgKOH/g, 1000 to 1500 mgKOH/g, or 1000 to 1400 mgKOH/g. When the amine value is set within the range of 850 to 1650 mgKOH/g, the amine-based compound rapidly reacts with the polycarboxylic acid during heat curing so that the increase rate of the molecular weight of the cured product of the aqueous binder is improved and the strength of the cured product of the aqueous binder is improved. From the same point of view, the amine-based compound preferably has at least three or more of an amino group and an imino group in total. Incidentally, the amine value is obtained according to JIS K7237.

The amine-based compound can comprise only the amine-based compound, but is preferably an aqueous solution comprising the amine-based compound at a concentration of 20 to 80 mass%, more preferably an aqueous solution comprising the amine-based compound at a concentration of 30 to 70 mass%, and further preferably an aqueous solution comprising the amine-based compound at a concentration of 30 to 50 mass%. By previously diluting the amine-based compound to be mixed in this way, the viscosity of the amine-based compound itself and the viscosity of the aqueous binder can be decreased. Further, since a local increase in concentration of the amino group and/or the imino group when the amine-based compound is mixed with the blocked polycarboxylic acid can be reduced, the aqueous binder tends to become more homogeneous.

Here, the amine-based compound can be mixed such that a ratio of the total number of moles of the amino group and the imino group in the amine-based compound to the total number of moles of the carboxy group (including the blocked carboxy group) in the blocked polycarboxylic acid is 0.003 or more or 0.01 or more in the aqueous binder finally thus obtained. Further, the amine-based compound can be mixed such that the ratio is 0.96 or less, 0.25 or less, 0.15 or less, or 0.125 or less. The ratio set within the numerical range of 0.003 or more and 0.96 or less enables the cured product of the aqueous binder to have superior strength. Incidentally, in a case where polycarboxylic acid which is not blocked exists in the aqueous binder, the carboxy group of the polycarboxylic acid which is not blocked is also included in the total number of moles of the carboxy group.

In production of the aqueous binder, a preliminary mixing step for mixing a crosslinking agent other than the amine-based compound (non-amine-based compound) and the polycarboxylic acid may be executed before the blocking step. By adding the non-amine-based compound before blocking, the concentration of the polycarboxylic acid in the system decreases so that dilution is carried out. This can cause the blocking reaction to more easily and uniformly occur.

A polyol is preferable as the non-amine-based compound. By using the polyol, since an ester bond can be introduced into the cured product of the aqueous binder as well as an amide bond, a range of design for performance of the cured product increases and a problem which is caused by excessive amide bond, such as water absorbability, can also be solved.

The polyol is preferably an water-soluble polyol, and specific examples thereof include aliphatic polyols such as 1,2-ethanediol (ethylene glycol) and dimers or trimers thereof, 1,2-propanediol (propylene glycol) and dimers or trimers thereof, 1,3-propanediol, 2,2-methyl-1,3-propanediol, 2-butyl-2-ethyl-1,3-propanediol, 1,3-butanediol, 1,4-butanediol, 2-methyl-2,4-butanediol, 1,5-pentanediol, 3-methyl-1,5-pentanediol, 2-methyl-2,4-pentanediol, 1,6-hexanediol, 1,4-cyclohexanediol, 2-ethyl-1,3-hexanediol, 2-hydroxymethyl-2-methyl-1,3-propanediol, 2-ethyl-2-hydroxymethyl-2-methyl-1,3-propanediol, 1,2,6-hexanetriol, and 2,2-bis(hydroxymethyl)-2,3-propanediol; alkanolamines such as diethanolamine, triethanolamine, and triisopropanolamine; sugar alcohols having 3 to 8 carbon atoms such as glycerol, erythritol, pentaerythritol, threitol, arabinitol, xylitol, ribitol, iditol, galactitol, sorbitol, mannitol, volemitol, and perseitol; polyester polyols obtained by reacting the above-described polyols with an organic acid such as phthalic acid, adipic acid, and azelaic acid; polyethylene glycols; polypropylene glycols; and acrylic resin-based polyols. These can be used singly or in combination of two or more kinds.

In the case of using a polyol as the non-amine-based compound, the polyol can be added in such an amount that a ratio of the total number of moles of the amino group, the imino group, and the hydroxyl group of the crosslinking agent to the total number of moles of the carboxy group (including the blocked carboxy group) of the blocked polycarboxylic acid in the aqueous binder finally thus obtained is preferably 0.3 to 1.2, more preferably 0.3 to 1.0, and further preferably 0.3 to 0.75. The ratio set within the numerical range of 0.3 to 1.2 enables the aqueous binder after curing to have both strength and water resistance. Incidentally, in a case where polycarboxylic acid which is not blocked exists in the aqueous binder, the carboxy group of the polycarboxylic acid which is not blocked is also included in the total number of moles of the carboxy group. Further, the ratio of the total number of moles of the amino group and the imino group of the amine-based compound to the total number of moles of the amino group, the imino group, and the hydroxyl group of the crosslinking agent in the aqueous binder finally thus obtained is set to preferably 0.01 to 0.80, more preferably 0.01 to 0.40, further preferably 0.01 to 0.30, and particularly preferably 0.01 to 0.20, from the viewpoint of the curing speed of the aqueous binder and water resistance after curing.

The aqueous binder is obtained by the above-described production method, but the total amount of the blocked polycarboxylic acid blended in the aqueous binder finally thus obtained (in terms of solid content) is preferably 60 mass% or more and less than 100 mass%, preferably 70 to 90 mass%, and more preferably 75 to 86 mass% based on the total mass of the aqueous binder in terms of solid content. The amount of the amine-based compound blended in the aqueous binder finally thus obtained (in terms of solid content) is preferably 0.2 to 20 mass%, more preferably 0.3 to 15 mass%, and further preferably 0.3 to 10 mass% based on the total mass of the aqueous binder in terms of solid content. When the amount of the amine-based compound blended is within 0.2 to 20 mass%, precipitation of the amine-based compound during production of the aqueous binder can be further suppressed. In the case of adding the non-amine-based compound, the addition amount thereof (in terms of solid content) is preferably 3 to 35 mass% based on the total mass of the aqueous binder finally thus obtained in terms of solid content.

The aqueous binder can further comprise other components other than the blocked polycarboxylic acid and the crosslinking agent. As the other components, those typically added to thermosetting aqueous binders can be included. Examples of the other components include a curing accelerator such as a reducible inorganic salt, a silane coupling agent, a heavy oil/water dispersion as a dust-inhibiting agent, and a colorant. Further, the aqueous binder can also comprise, as the other components, inorganic sulfate (neutralizer) for neutralizing an alkaline component eluted from inorganic fibers such as glass in the case of producing the inorganic fiber heat-insulating sound-absorbing material by applying the aqueous binder to inorganic fibers. These components can be added in the system in any of steps of the method for producing an aqueous binder.

The total amount of other components blended is preferably 0.1 to 12 parts by mass in terms of solid content with respect to the total of 100 parts by mass of the blocked polycarboxylic acid and the crosslinking agent.

Examples of the form of the aqueous binder include emulsion, colloidal dispersion, and water-soluble composition, and any forms may be used, but water-soluble composition is more effective than emulsion or colloidal dispersion.

The pH of the aqueous binder is preferably 6.0 to 8.0, more preferably 6.0 to 7.0, and further preferably 6.0 to 6.5. When the pH is set within the range of 6.0 to 8.0, the curing reaction of the aqueous binder favorably proceeds.

The solid content of the aqueous binder is preferably 5 to 40 mass% and more preferably 10 to 30 mass% of the total mass of the aqueous binder. When the solid content is set to 5 mass% or more, the amount of moisture is proper, and thus time for thermal curing of the aqueous binder becomes favorable. When the solid content is set to 40 mass% or less, a decrease in fluidity of the aqueous binder can be prevented. Incidentally, in this specification, solid content indicates a component which does not volatilize when the aqueous binder is heated at one atmosphere and at a temperature of room temperature (about 23°C) or higher and 100°C or lower. Incidentally, component other than the solid content (volatile components) is preferably water or a volatile basic compound described later.

The inorganic fiber heat-insulating sound-absorbing material can be obtained by applying the aqueous binder obtained by the aforementioned production method to the inorganic fibers and molding the aqueous binder through thermal curing.

The method for producing an inorganic fiber heat-insulating sound-absorbing material is not particularly limited, but for example, the inorganic fiber heat-insulating sound-absorbing material can be produced as follows. That is, melted inorganic raw materials are first fiberized by a fiberization apparatus, and immediately thereafter, the aqueous binder is applied to the inorganic fibers. Application of the aqueous binder to the inorganic fibers is often performed, for example, under a high-temperature atmosphere of about 200 to 350°C. Then, the inorganic fibers applied with the aqueous binder are deposited on a perforated conveyor to form a bulky intermediate for the inorganic fiber heat-insulating sound-absorbing material, the intermediate is fed into a pair of upper and lower perforated conveyors providing a gap such that a desired thickness is obtained, and is heated while being compressed, and the aqueous binder is cured to form the inorganic fiber heat-insulating sound-absorbing material. The inorganic fiber heat-insulating sound-absorbing material is covered with a cover material as necessary and then cut into a desired width and length.

Since the aqueous binder obtained by the production method according to the present embodiment is homogeneous, in the case of producing an inorganic fiber heat-insulating sound-absorbing material by the method as described above, the aqueous binder can be uniformly applied to the inorganic fibers. Therefore, compressive strength or tensile strength of an inorganic fiber heat-insulating sound-absorbing material obtained by thermally curing the applied aqueous binder becomes superior.

Hereinbefore, the preferred embodiments of the present invention have been described in detail; however, the present invention is not limited to the above-described embodiments and various modifications can be employed.

### Examples

Hereinafter, the invention will be described in detail based on Examples; however, the present invention is not limited to the following Examples.

### (Examples 1 to 7 and Comparative Example 1)

Polyacrylic acid (weight average molecular weight: 8000, acid value: 660 mgKOH/g) radically polymerized using sodium hypophosphite as a chain transfer agent was dissolved in water to obtain a resin solution (solid content: 45 mass%). An aqueous solution of 28% ammonium hydroxide was added in such an amount that the block percentage became a value described in Table 1 to 100 parts by mass of the resin solution in terms of solid content. An aqueous solution of polyethyleneimine (weight average molecular weight: 600, amine value: 1120 mgKOH/g) (polyethyleneimine concentration: 40 mass%) was further added to the resin solution added with the aqueous ammonium hydroxide solution to obtain an aqueous binder. Here, preparation was performed for two cases, that is, (A) a case where the amount of polyethyleneimine was 0.60 part by mass in terms of solid content and (B) a case where the amount of polyethyleneimine was 16.25 parts by mass in terms of solid content, and then the mixed state of the aqueous binder obtained in each case was observed by visual inspection. The results thereof are presented in Table 1. In Table 1, A means the case of obtaining a homogeneous mixture without any precipitate, B means the case without any problem in practical use although a precipitate is slightly generated, and C means the case of precipitation occurring.

**[Table 1]**

| | Comparative Example 1 | Example 1 | Example 2 | Example 3 |
|---|---|---|---|---|
| Block percentage | 0% | 10% | 30% | 40% |
| Composition (A) | C | B | A | A |
| Composition (B) | C | B | B | A |

| | Example 4 | Example 5 | Example 6 | Example 7 |
|---|---|---|---|---|
| Block percentage | 60% | 80% | 90% | 100% |
| Composition (A) | A | A | A | A |
| Composition (B) | A | A | A | A |

### (Examples 8 to 14 and Comparative Example 2)

Polyacrylic acid (weight average molecular weight: 12000, acid value: 716 mgKOH/g) radically polymerized using sodium hypophosphite as a chain transfer agent was dissolved in water to obtain a resin solution (solid content: 50 mass%). An aqueous solution of 28% ammonium hydroxide was added in such an amount that the block percentage became a value described in Table 2 to 100 parts by mass of the resin solution in terms of solid content. An aqueous solution of alkylene polyamine having ethyleneamine as a repeating unit (weight average molecular weight: 350, amine value: 1200 mgKOH/g) (alkylene polyamine concentration: 40 mass%) was added to the resin solution added with the aqueous ammonium hydroxide solution to obtain an aqueous binder. Here, preparation was performed for two cases, that is, (C) a case where the amount of alkylene polyamine was 2.3 parts by mass in terms of solid content and (D) a case where the amount of alkylene polyamine was 15.75 parts by mass in terms of solid content, and then the mixed state of the aqueous binder obtained in each case was observed by visual inspection. The results thereof are presented in Table 2. In Table 2, A means the case of obtaining a homogeneous mixture without separation of a viscous substance, B means the case without any problem in practical use although separation of a viscous substance slightly occurs, and C means the case of separation of a viscous substance occurring.

**[Table 2]**

| | Comparative Example 2 | Example 8 | Example 9 | Example 10 |
|---|---|---|---|---|
| Block percentage | 0% | 10% | 30% | 40% |
| Composition (C) | C | B | B | A |
| Composition (D) | C | B | B | A |

| | Example 11 | Example 12 | Example 13 | Example 14 |
|---|---|---|---|---|
| Block percentage | 60% | 80% | 90% | 100% |
| Composition (C) | A | A | A | A |
| Composition (D) | A | A | A | A |

## Claims

1. A method for producing a thermosetting aqueous binder comprising a polycarboxylic acid and an amine-based compound serving as a crosslinking agent for the polycarboxylic acid and having two or more per molecule of at least one from between an amino group and an imino group, the method comprising:
a blocking step for blocking at least a part of the carboxy groups of the polycarboxylic acid with a volatile basic compound to obtain a blocked polycarboxylic acid; and
a mixing step for mixing the blocked polycarboxylic acid and the amine-based compound.

2. The production method according to claim 1, wherein the amine-based compound in the mixing step is an aqueous solution comprising the amine-based compound at a concentration of 20 to 80 mass%.

3. The production method according to claim 1, wherein a preliminary mixing step for mixing a crosslinking agent other than the amine-based compound and the polycarboxylic acid is provided before the blocking step.

4. The production method according to claim 2, wherein a preliminary mixing step for mixing a crosslinking agent other than the amine-based compound and the polycarboxylic acid is provided before the blocking step.

5. The production method according to claim 3, wherein the crosslinking agent other than the amine-based compound is a polyol.

6. The production method according to claim 4, wherein the crosslinking agent other than the amine-based compound is a polyol.
